Europäisches Patentamt

European Patent Office

Office européen des brevets

(11) Publication number: **0 187 169**
**B1**

(12) **EUROPEAN PATENT SPECIFICATION**

(45) Date of publication of patent specification: **14.03.90**

(21) Application number: **84116338.9**

(22) Date of filing: **27.12.84**

(51) Int. Cl.⁵: **G 11 B 5/84, H 01 F 41/18,**
**G 11 B 5/64, H 01 F 10/16**

(54) Process of manufacturing magnetic recording media and the media.

(30) Priority: **27.12.83 JP 248955/83**

(43) Date of publication of application:
**16.07.86 Bulletin 86/29**

(45) Publication of the grant of the patent:
**14.03.90 Bulletin 90/11**

(84) Designated Contracting States:
**DE FR GB**

(56) References cited:
**JOURNAL OF APPLIED PHYSICS, vol. 53, no. 10,
October 1982, pages 6941-6945, American
Institute of Physics, US; H. MAEDA: "Effect of
nitrogen on the high coercivity and
microstructures of Co-Ni alloy films"
PATENTS ABSTRACTS OF JAPAN, vol. 6, no.
254 (E-148)1132r, 14th December 1982; & JP-A-
57 153 411
PATENTS ABSTRACTS OF JAPAN, vol. 6, no.
255 (P-162)1133r, 14th December 1982; & JP-A-
57 152 545**

(73) Proprietor: **HITACHI METALS, LTD.**
**1-2, Marunouchi 2-chome Chiyoda-ku
Tokyo 100 (JP)**

(72) Inventor: **Endo, Juro
17, Higashibeppu
Kumagaya-shi (JP)**
Inventor: **Murakami, Shiro
100-1, Higashibeppu
Kumagaya-shi (JP)**
Inventor: **Fujii, Shigeo
600, Jurokken
Kumagaya-shi (JP)**
Inventor: **Nakao, Masayuki
450, Niiborishinden
Kumagaya-shi (JP)**
Inventor: **Iimura, Tsutomu
53-12, Sunakawacho-7-chome
Tachikawa-shi (JP)**

(74) Representative: **Strehl, Schübel-Hopf, Groening
Maximilianstrasse 54 Postfach 22 14 55
D-8000 München 22 (DE)**

Courier Press, Leamington Spa, England.

# EP 0 187 169 B1

## Description

This invention relates to magnetic recording media, especially a rigid magnetic recording disk which is used for a longitudinal, that is in-plane, recording.

### Background of the Invention

As magnetic recording media on a rigid disk, there have been used γ-hematite, Co—Pt, Co—Ni—Pt, and Co—Ni—P. The hematite media are coated with a resin on an aluminum or aluminum alloy substrate in a thin layer. The hematite media have been used for a long time in a lot of applications. But recently, strong demand for high recording density disk has occurred but the coated hematite media can not clear the demand. Instead of the coated hematite media, thin film media have been proposed for high recording density. The thin film media include plated media and sputtered media. The plated media, e.g. Co—Ni—P, have a disadvantage such as corrosion due to residual chemicals. Also, the corrosion causes an error of reading written data so that a very high density of recording cannot be accomplished. Consequently, plated thin film media for longitudinal recording have inherently high defect densities and poor corrosion resistance.

By contrast, sputtered thin film media have been expected to have a superior quality in every respect including: electrical characteristics, flyability, durability, wear, adhesion, defect density, corrosion resistance and reproducibility. As the sputtered thin film media, cobalt base alloys, e.g. Co—Ni—Pt, Co—Ni, have been proposed to be adapted for magnetic recording media for high longitudinal recording density. Ci—Ni—Pt is rather expensive because it contains platinum of about 10 at % which is an expensive element.

On the other hand, a directly sputtered Co—Ni film tends to have its C-axes perpendicular to the sputtered plane so it is not appropriate to longitudinal recording.

For longitudinal recording media, magnetic recording media of sputtered thin film were proposed in some articles. According to Dr. H. Maeda, J. Appl. Phys. 53 (5) May 1982, p. 3735 "High coercivity Co and Co—Ni alloy films" and J. Appl. Phys. 53 (10) Oct. 1982 p. 6941 "Effect of nitrogen on the high coercivity and micro-structures of Co-Ni alloy films" and his patent application, JP—A—57—72307, cobalt metal or Co—Ni-alloy is sputtered in an atmosphere including nitrogen to form a thin film including nitrogen and then the thin film is heat-treated in vacuum or inert gas atmosphere to produce thin film magnetic recording media with good magnetic properties. Those papers teach that the sputtering process is required to be done on a substrate which is cooled by liquid nitrogen to obtain sufficient nitrogen content in the sputtered thin film.

Like Dr. Maeda's experiment, when a glass plate or a quartz plate is used as the substrate, it is no problem to cool the substrate to liquid nitrogen temperature. The sputtering surface of the substrate is cooled to the temperature to make it easy to capture nitrogen in the sputtered film even though ion bombarding by sputtering causes to increase the temperature of the sputtering surface.

However, when an anodized aluminum plate is used as a substrate, the anodized layer is cooled to liquid nitrogen temperature on its one side which adheres to aluminum substrate and is heated on the other side by ion bombarding so the sputtered surface of the anodized layer is heated to a temperature above room temperature. The temperature difference between both the sides of anodized layer on aluminum substrate reaches to 100°C or more. Since the anodized layer has poor heat conductivity, this temperature difference results on cracks in the layer or peeling of the layer.

Further, the cooling of the substrate by liquid nitrogen causes high cost to manufacture a disk not only by precious liquid nitrogen consumption but also by requirement of complicated equipment and by impossibility of simultaneous sputtering of the two sides of the substrate.

JP—A—57—153411 discloses a method of producing a magnetic recording medium which comprises a cobalt thin film containing cobalt nitride formed by depositing a cobalt alloy in nitrogen on a water-cooled substrate.

### Brief Description of the Invention

An object of the invention is to provide a process of manufacturing sputtered magnetic recording media having excellent magnetic properties.

Another object of the invention is to provide longitudinal magnetic recording media which is manufactured by sputtering on a substrate without cooling.

According to this invention, the objects are accomplished by a process as set forth in claim 1 and, respectively, by a magnetic recording media as set forth in claim 5.

The thickness of the sputtered media is preferably 40 to 100 µm. The substrate temperature is allowed to be from room temperature to 300°C, preferably to 100°C from the point of productivity and ease of nitrogen absorption.

The heat-treatment after sputtering is accomplished at a temperature at which the nitrogen that has been absorbed in the sputtered film is evaporated from the film. The preferred temperature is 310°C to 500°C.

2

## Detailed Description of the Embodiments

According to this invention, first a sputtered thin film including nitrogen of an appropriate content is prepared during a sputtering process to make a Co—Ni—N layer of amorphous structure or fine crystalline structure of a grain size of about 5 to about 25 nm or a mixture of such microcrystals and amorphous state. Then, by crystallization and/or grain growth through heating, the C-axes of hexagonal Co—Ni crystals are mainly oriented in the surface.

According to this invention, an amorphous-like or microcrystal Co—Ni—N layer including nitrogen of 10 to some tens atomic % can be formed without special cooling of a substrate at a sputtering deposition rate of 2.5 to 17 nm/min, even at a high speed sputtering deposition rate of 30 to 200 nm/min. Heat-treatment after the sputtering results in magnetic recording media showing considerably better properties than the prior art. When the substrate was heated to more than 300°C on the sputtering, the nitrogen content in the sputtered layer was decreased so that coercivity after heat treatment was decreased and a magnetic thin film appropriate for high density magnetic recording was not obtained. When the substrate temperature is from room temperature to 100°C, nitrogen is easily captured in the sputtered layer.

The composition of the media is not limited to cobalt metal and cobalt-nickel alloy, but Pt, Ru, Rh, Os, Ir, Re, Cr, Ti, Mo and/or W of less than about 10 atom % can be added to the cobalt or cobalt nickel alloy. These additives may improve the corrosion resistance.

This invention will be explained by examples below.

The examples were carried out by magnetron sputtering, but it is apparent from ion technicals that similar results can be obtained by ion beam sputtering.

### Example I

By planar magnetron sputtering process, thin film layers were formed on anodized aluminum alloy substrates (3.9 wt% Mg-bal. Al) by the following conditions.

| | |
|---|---|
| Initial evacuation | 1 to 2 × 10⁻⁶ Torr (0.133 to 0.267 mPa) |
| Total atm. pressure | 20 m Torr (2.67 Pa) |
| Nitrogen content | 50 vol. % in Argon |
| Electric power | 1 KW |
| Target diameter | 120 mm |
| Distance between cathode and substrate | 120 mm |
| Film thickness | 80 to 100 nm |

As a target, cobalt metal and Co-Ni alloy plates were used. The substrate temperature was controlled by an electric heater positioned in a substrate holder and measured by a thermocouple on the back of the substrate. The deposition rate of the thin film was adjusted by sealing the substrate. Nitrogen contents in the sputtered layer were determined by Auger electron microscope analysis.

From X-ray differaction of the sputtered layers, it was recognized that all samples except the one of 350°C substrate temperature exhibited halo pattern diffraction spectra, that is, amorphous or microcrystal material's spectra, and some unknown spectra.

After 1 hour heat treatment at 400°C in vacuum, the thin films were measured with respect to the magnetic properties in a direction parallel to the film surface by a vibrating magnetometer.

The experimental data are shown in Table 1 in which squareness S means the ratio of residual induction Br to magnetic flux density B at 240 kA/m magnetic field strength.

The nitrogen content of all the films was less than 5 atomic % after 1 hour heat treatment at 400°C in vacuum. It was recognized by X-ray diffraction that all of the films belonged to the h.c.p. crystal except the sample of 350°C substrate temperature and that the C-axes were strongly oriented in the media plane.

TABLE 1

| Target composition (at %) | Sputtering condition | | Nitrogen content before heating (at %) | Magnetic properties | | |
|---|---|---|---|---|---|---|
| | Substrate temperature (°C) | Deposition rate (nm/min) | | Coercive force Hc (kA/m) | Residual induction Br (T) | Squareness S(Br/B3k) |
| Metallic Co | R.T. | 30 | 15 | 32 | 1.13 | 0.75 |
| | 100 | 30 | 15 | 32 | 1.15 | 0.75 |
| | 200 | 20 | 16 | 32 | 1.08 | 0.70 |
| | 300 | 20 | 12 | 28 | 1.02 | 0.70 |
| | 350 | 20 | 7 | 2 | 0.80 | 0.55 |
| Co-15 Ni | R.T. | 30 | 15 | 84 | 1.05 | 0.78 |
| | 100 | 30 | 16 | 84 | 1.16 | 0.83 |
| | 200 | 20 | 15 | 52 | 1.05 | 0.75 |
| | 300 | 20 | 13 | 48 | 1.08 | 0.75 |
| | 350 | 20 | 5 | 16 | 0.90 | 0.65 |
| Co-25 Ni | R.T. | 30 | 16 | 88 | 1.10 | 0.83 |
| | 100 | 30 | 15 | 88 | 1.05 | 0.85 |
| | 200 | 20 | 13 | 56 | 1.00 | 0.80 |
| | 300 | 20 | 13 | 56 | 0.95 | 0.80 |
| | 350 | 20 | 9 | 24 | 0.72 | 0.60 |
| Co-35 Ni | R.T. | 20 | 14 | 60 | 1.00 | 0.75 |
| | 100 | 20 | 16 | 64 | 1.00 | 0.75 |
| | 200 | 20 | 13 | 36 | 0.95 | 0.73 |
| | 300 | 20 | 11 | 32 | 0.90 | 0.73 |
| | 350 | 20 | 7 | 20 | 0.66 | 0.55 |

When the nickel content of the thin film composition exceeded 40 atomic %, the f.c.c. phase appeared along with the h.c.p. and the film is not appropriate for magnetic recording media because both squareness and coercivity were too low.

From the above experiments it is apparent that the media which were made on the substrate of less than 300°C showed enough squareness and were appropriate for magnetic recording media. Especially, the film made on a substrate of room temperature to 100°C showed high coercivity and suitable for high density magnetic recording. The films of Co-15% Ni and Co-25% Ni showed squareness and residual induction which are superior to the squareness of 0.75 and the magnetic flux density of 0.8T in prior art.

Magnetization of a film after heat treatment of 300°C × 1 hour is only 20 to 30% of that after a heat treatment of 400°C × 1 hour. By another experiment it was found that magnetic properties of the media which were formed on an anodized aluminum alloy substrate and heat-treated at 310°C for an hour were approximately on the same level as that obtained with the media after 500°C × 1 hour heat treatment. 310°C × 1 hour heat treatment is enough to obtain excellent magnetic properties.

Heat treatment at a temperature of above 500°C may be applied, but when an anodized aluminum alloy substrate is used, such a high temperature heat treatment deforms the aluminum substrate and causes cracks in the film or peeling-off of the film. So, it is preferable that the heat treatment is done at a temperature between 310°C and 500°C.

### Example II

By the same sputtering conditions as described in Example I except for the following, thin film layers were prepared on an anodized aluminum alloy substrate with anodized layer of about 13 μm thick.

| | |
|---|---|
| Total atm. pressure | 40 m Torr (5.33 Pa) |
| Nitrogen content | 75 vol.% in Argon |
| Electric power | 1 to 2.5 KW |
| Electrode distance | 80 mm |
| Film thickness | 40 to 60 nm |

As a result of increasing nitrogen content in the sputtering atmosphere, the nitrogen content in the sputtered layers in this Example was rather large as compared to that in Example I. But, during heat treatment at 320 to 400°C for 1 hour almost all of nitrogen in the layer was evaporated and the nitrogen in the film after the heat treatment was less than 5 at %, that is, most samples contained only about 1% nitrogen.

Magnetic properties measured with different substrate temperatures are shown in Table 2. From the table, it is apparent that the nitrogen content in sputtered layers depends on the substrate temperature, and the lower the substrate temperature the higher the nitrogen content. Even a high speed deposition rate, e.g. 80 nm/min and 200 nm/min did not affect the magnetic properties.

TABLE 2

| Target composition (at %) | Sputtering condition | | Nitrogen content before heating (at %) | Magnetic properties | | |
|---|---|---|---|---|---|---|
| | Substrate temperature (°C) | Deposition rate (nm/min) | | Coercive force Hc (kA/m) | Residual induction Br (T) | Squareness S(Br/B3k) |
| Co-15 Ni | R.T. | 80 | 22 | 80 | 1.05 | 0.79 |
| | 100 | 80 | 22 | 76 | 1.07 | 0.80 |
| | 200 | 80 | 18 | 72 | 1.07 | 0.80 |
| | 300 | 80 | 14 | 60 | 1.04 | 0.77 |
| | 350 | 80 | 10 | 40 | 0.91 | 0.67 |
| Co-20 Ni | R.T. | 5 | 45 | 72 | 1.05 | 0.80 |
| | 100 | 10 | 38 | 68 | 1.03 | 0.82 |
| Co-25 Ni | R.T. | 200 | 17 | 68 | 1.06 | 0.80 |
| | 100 | 200 | 18 | 68 | 1.05 | 0.79 |
| | 300 | 200 | 13 | 60 | 1.09 | 0.82 |
| | R.T. | 40 | 35 | 84 | 1.02 | 0.81 |
| | 100 | 40 | 34 | 80 | 1.04 | 0.81 |
| | 300 | 40 | 26 | 76 | 1.05 | 0.83 |

EP 0 187 169 B1

As apparent from the above examples, by sputtering on a non-magnetic substrate which is not cooled by liquid nitrogen but is maintained at a temperature between room temperature and 300°C, preferably to 100°C, considerably better magnetic properties were obtained than those obtained on a liquid nitrogen cooled substrate. Since this invention does not use liquid nitrogen, thin film forming is easy and causes big economic effect because of the possibility of simultaneously sputtering both sides of a disk, simple equipment for sputtering and no consumption of precious liquid nitrogen.

## Claims

1. A process for manufacturing magnetic recording media comprising sputtering with an alloy target on a non-magnetic substrate in an atmosphere of inert gas including nitrogen, the alloy target having approximately the same composition as the final products, to obtain on the substrate a thin film including nitrogen, and heating the thin film to evaporate the nitrogen which has been absorbed in the thin film in the sputtering process and to form magnetic recording media which have a composition of Ni less than 35 atomic % and the balance substantially being Co and substantially a hexagonal close-packed crystalline structure in which the C-axes are mainly in a recording media plane, characterized in that the non-magnetic substrate is maintained at a temperature between room temperature and 300°C.

2. The process as set forth in Claim 1, wherein the thin film is formed on an anodized aluminum alloy substrate.

3. The process as set forth in Claim 2, wherein the thin film is 40 to 100 nm thick.

4. The process as set forth in Claim 1, wherein the non-magnetic substrate is maintained at a temperature between room temperature and 100°C.

5. A magnetic recording media of a thin film formed on a non-magnetic substrate, the thin film having a composition of Ni less than 35 atomic % and the balance substantially being Co and substantially a hexagonal close packed crystalline structure in which the C-axes are mainly in a recording media plane, the thin film being sputtered in atmosphere of inert gas including nitrogen on the non-magnetic substrate and treated by heating the sputtered film to evaporate the nitrogen which has been absorbed in the sputtered film in the sputtering process and to increase the crystal size adequately from microcrystal or a mixture of microcrystal and amorphous material, characterized in that the substrate is maintained at a temperature between room temperature and 300°C.

6. The magnetic recording media as set forth in Claim 5, wherein the thin film includes nitrogen of at most 5 atomic %.

## Patentansprüche

1. Verfahren zur Herstellung von magnetischen Aufzeichnungsmedien, wobei in einer stickstoffhaltigen Inertgas-Atmosphäre mit einem Legierungs-Target auf ein nicht-magnetisches Substrat, das annähernd die gleiche Zusammensetzung aufweist wie die Enderzeugnisse, gesputtert wird, um auf dem Substrat eine stickstoffhaltige Dünnschicht zu erzielen, und wobei die Dünnschicht erwärmt wird, um den während des Sputtervorgangs in ihr absorbierten Stickstoff zu verdampfen und magnetische Aufzeichnungsmedien mit einer Zusammensetzung von weniger als 35 Atom-% Ni, Rest im wesentlichen Co, und im wesentlichen einer dicht-gepackten Hexagonal-Kristallstruktur, in der die C-Achsen hauptsächlich in der Ebene des Aufzeichnungsmediums liegen, auszubild erzeugen, dadurch gekennzeichnet, daß das nicht-magnetische Substrat bei einer Temperatur zwischen Zimmertemperatur und 300°C gehalten wird.

2. Verfahren nach Anspruch 1, wobei die Dünnschicht auf einem anodisierten Aluminiumlegierungs-Substrat ausgebildet wird.

3. Verfahren nach Anspruch 2, wobei die Dünnschicht 40 bis 100 nm dick ist.

4. Verfahren nach Anspruch 1, wobei das nicht-magnetische Substrat bei einer Temperatur zwischen Zimmertemperatur und 100°C gehalten wird.

5. Magnetisches Aufzeichnungsmedium aus einer auf einem nicht-magnetischen Substrat ausgebildeten Dünnschicht, die eine Zusammensetzung von weniger als 35 Atom-% Ni, Rest im wesentlichen Co, und im wesentlichen eine dicht-gepackte Hexagonal-Kristallstruktur aufweist, in der die C-Achsen hauptsächlich in einer Ebene des Aufzeichnungsmediums liegen, wobei die Dünnschicht in einer stickstoffhaltigen Inertgasatmosphäre auf das nicht-magnetische Substrat aufgesputtert und durch Erwärmen der Sputter-Schicht behandelt ist, um den beim Sputter-Vorgang in ihr absorbierten Stickstoff zu verdampfen und die Kristallgröße von Mikrokristallen oder einem Gemisch aus Mikrokristallen und amorphem Material adäquat zu erhöhen, dazu gekennzeichnet, daß das Substrat bei einer Temperatur zwischen Zimmertemperatur und 300°C gehalten ist.

6. Magnetisches Aufzeichnungsmedium nach Anspruch 5, wobei die Dünnschicht höchstens 5 Atom-% Stickstoff enthält.

7

## EP 0 187 169 B1

**Revendications**

1. Un procédé pour la fabrication de milieux d'enregistrement magnétiques comprenant la pulvérisation avec une cible en alliage sur un substrat non-magnétique, dans une atmosphère de gaz inerte contenant de l'azote, la cible en alliage ayant approximativement la même composition que les produits finaux, pour obtenir sur le substrat un film mince contenant de l'azote, et le chauffage du film mince pour évaporer l'azote qui a été absorbé dans le film mince au cours du processus de pulvérisation, et pour former des milieux d'enregistrement magnétiques qui ont une composition en Ni inférieure à 35 en % atomique, le reste étant sensiblement du Co , et sensiblement une structure cristalline hexagonale compacte dans laquelle les axes C sont pricipalement dans un plan de milieux d'enregistrement, caractérisé en ce que le substrat non-magnétique est maintenu à une température entre la température ambiante et 300°C.

2. Le procédé tel qu'exposé à la revendication 1, dans lequel le film mince est formé sur un substrat en alliage d'aluminium anodisé.

3. Le procédé tel qu'exposé à la revendication 2, dans lequel le film mince a une épaisseur de 40 à 100 nm.

4. Le procédé tel qu'exposé à la revendication 1, dans lequel le substrat non-magnétique est maintenu à une température comprise entre la température ambiante et 100°C.

5. Un milieu d'enregistrement magnétique d'un film mince formé sur un substrat non-magnétique, le film mince ayant une composition en Ni inférieure à 35 en % atomique, le reste étant sensiblement du Co, et sensiblement une structure cristalline hexagonale compacte dans laquelle les axes C sont principalement dans un plan de milieux d'enregistrement, le film mince étant pulvérisé dans une atmosphère de gaz inerte incluant de l'azote, sur le substrat non-magnétique, et traité par chauffage du film pulvérisé pour évaporer l'azote qui a été absorbé dans le film pulvérisé au cours du processus de pulvérisation, et pour augmenter la taille du cristal de façon adéquate à partir d'un microcristal ou d'un mélange de microcristal et de matériau amorphe, caractérisé en ce que le substrat est maintenu à une température entre la température ambiante et 300°C.

6. Le milieu d'enregistrement magnétique tel qu'exposé à la revendication 5, dans lequel le film mince inclut de l'azote pou au plus 5 en % atomique.